# EUROPÄISCHE PATENTSCHRIFT

(11) **EP 1 492 743 B1**
(45) Veröffentlichungstag und Bekanntmachung des Hinweises auf die Patenterteilung: **26.01.2011**
(21) Anmeldenummer: 02807173.6
(22) Anmeldetag: 05.04.2002
(51) Int. Cl.: C04B 41/49, C04B 41/53

(54) **OBERFLÄCHENBEHANDELTER BETONWERKSTEIN UND VERFAHREN ZU DESSEN HERSTELLUNG**
SURFACE-TREATED CUT CONCRETE STONE AND METHOD FOR THE PRODUCTION THEREOF
PIERRE DE TAILLE DE BETON TRAITEE EN SURFACE ET SON PROCEDE DE PRODUCTION

(43) Veröffentlichungstag der Anmeldung: 05.01.2005
(73) Patentinhaber: Reinhardt Beton GmbH, 09387 Jahnsdorf, OT Pfaffenhain (DE); Fraunhofer-Gesellschaft zur Förderung der angewandten Forschung e.V., 80686 München (DE)
(72) Erfinder: GORETZKI, Lothar, 99423 Weimar (DE); HOYER, Thomas, 99428 Bad Berka (DE); KRIEGEL, Ralf, 07768 Kahla (DE); REINHARDT, Tilo, 09387 Jahnsdorf (DE); REINHARDT, Wolfram, 09387 Jahnsdorf (DE); VOIGT, Ingolf, 07743 Jena (DE)
(74) Vertreter: Oehmke, Volker
(86) Internationale Anmeldenummer: PCT/EP2002/003780
(87) Internationale Veröffentlichungsnummer: WO 2003/084898

(56) Entgegenhaltungen:
- EP-A- 0 561 708
- EP-A- 0 616 989
- EP-A- 1 072 572
- EP-A- 1 095 923
- EP-A- 1 106 315
- DE-A- 10 049 721
- DE-A- 19 707 219
- DE-U- 29 921 129
- GB-A- 910 641

## Beschreibung

Die Erfindung betrifft einen oberflächenbehandelten, Betonwerkstein mit den Eigenschaften:
- säurebeständig und laugenbeständig,
- beständig gegenüber handelsüblichen Reinigungs- und Pflegemitteln,
- hemmend gegenüber Auslaugerscheinungen, Ausblühungen und damit verbundenen oberflächlichen Verfärbungen sowie
- wasser-und schmutzabweisend.

Die Erfindung betrifft auch Verfahren zur Herstellung solcher oberflächenoberflächenbehandelter Betonwerksteine.

Die Vorzüge zementgebundener Steine liegen in der hohen Festigkeit, die durch neue Entwicklungen bis in den Bereich von 200 N/m² gesteigert wurde und in dem gegenüber Natursteinen geringeren Preis. Auf Grund seiner Porosität (Mikrorisse im Gefüge) ist der Betonwerkstein jedoch anfällig für Verschmutzungen, so dass große Aufwendungen zur Reinigung unter Einsatz aggressiver Chemikalien notwendig sind. Darüber hinaus besteht durch den Karbonatgehalt erhebliche Empfindlichkeit gegenüber Säureeinwirkung.

Versiegelungsmittel auf der Basis von Wachsen werden durch die mit aggressiven Reinigungsmitteln und rotierenden Bürsten betriebenen industriellen Reinigungsmaschinen schnell wieder aus den Poren herausgelöst. Beschichtungsmittel auf Kunstharzbasis (z. B. Poly[meth]acrylate) bieten mechanischer Beanspruchung und organischen Lösungsmitteln nur wenig Widerstand. Die am Markt erhältlichen Silan-, Siloxan- oder Siliconbeschichtungen führen zu einer Hydrophobierung der Oberfläche. Sie werden vor allem zur Imprägnierung verwendet, ohne die Poren zu versiegeln (Hans Schuhmann, Handbuch Betonschutz durch Beschichtungen, Expert-Verlag 1992, insbes. Kapitel 14) und sie bieten auf Grund ihrer geringen Haltbarkeit wenig Schutz gegen Säureangriff oder Verfärbungen.

Die gegenwärtig kommerziell angebotenen Oberflächenbehandlungsmittel sind in Tabelle 1 gegenübergestellt:

| Oberflächenbehandlung | Vorteile | Nachteile |
|---|---|---|
| Fluatieren (z. B. mit MgSiF₆) | Verdichtung und Verfestigung der Oberfläche, Erhöhung der Beständigkeit gegen Wasser | keine Säurebeständigkeit |
| Kristallisieren (z. B. mit Oxalaten) | Verdichtung und Verfestigung der Oberfläche, Erhöhung der Beständigkeit gegen Wasser, Erhöhung des Glanzes | keine Säurebeständigkeit |
| Beschichtung mit Wachsen | Versiegelung der Poren, Erhöhung der Beständigkeit gegen Wasser und Säuren, Erhöhung des Glanzes | keine Beständigkeit gegen industriell eingesetzte Reinigungsmittel, keine Beständigkeit gegen organischeLösungsmittel |
| Beschichtung mit Epoxidharzen | Versiegelung der Poren, Erhöhung der Beständigkeit gegen Wasser und Säuren, Erhöhung des Glanzes | Verfärbungen, geringe Witterungsbeständigkeit |
| Beschichtung mit Polymethacrylaten | Versiegelung der Poren, Erhöhung der Beständigkeit gegen Wasser und Säuren, Erhöhung des Glanzes | geringe mechanische Beständigkeit |
| Beschichtung mit Silanen, Siloxanen, Siliconen | hydrophobe Oberfläche, Erhöhung der Beständigkeit gegen Wasser | geringe mechanische Beständigkeit, nicht ausreichend säurebeständig |

Im US Patent 3,354,022 wird beschrieben, wie man durch definierte Strukturierung hydrophober Oberflächen die wasserabstoßende Wirkung erhöhen kann.

In den letzten Jahren ist es Prof. Barthlott gelungen, den Mechanismus der schmutzabweisenden Eigenschaften bestimmer Pflanzenblätter aufzuklären (WO 96/04123). Diese als Lotus-Effekt bekannt gewordene Selbstreinigungs-Fähigkeit beruht auf strukturierten hydrophoben Blattoberflächen. Solche Oberflächen sind wie oben beschrieben extrem wasserabweisend, d. h. der Wasserrandwinkel ist deutlich größer als 110 ° und der Tropfen hat nahezu Kugelgestalt. Das Wasser rollt so auf einer geneigten Oberfläche ab (perlt ab). Dabei wird Schmutz vom Wasser aufgenommen und mit abtransportiert.

Um derartige "selbstreinigende Oberflächen" zu erzeugen bedarf es spezieller Strukturen, die gegenüber mechanischen Belastungen nicht stabil wären. Darüber hinaus ist mit "Selbstreinigung" nach Prof. Barthlott gemeint, dass z. B. Regenwasser ausreichend ist, um eine Fassade sauber zu halten, indem sämtliche Schmutzpartikel durch die abrollenden Regentropfen aufgenommen und entfernt werden. Das ist bei waagerecht liegenden Flächen - wie Fußböden - nicht gegeben.

Die Gebrauchsmusterschrift DE 299 21 129 U1 beschreibt die Beschichtung von Fußböden aus Naturstein, dichter Grobkeramik und Betonstein durch ein anorganisch/organisches Hybridpolymer-Sol-Gel-System. Damit sollen in erster Linie rutschhemmende Beschichtungen realisiert werden. Im Beispiel wird ein UV-härtendes System angeführt. Es ist vor allem für die Nachbehandlung von Fußböden in alten Gebäuden, wie z. B. Schlössern, Burgen, Klöstern, Herrensitzen vorgesehen.

DE 3031 598 A1 beschreibt Metallaminsiliconatlösungen, die u. a. zur Mauerwerksimprägnierung verwendet werden. Sie dienen jedoch nicht zur Versiegelung der Oberfläche.

Der Erfindung liegt die Aufgabe zugrunde, einen Betonwerkstein an der Oberfläche zur Erzielung der eingangs aufgezählten Eigenschaften so zu behandeln, daß ein hochverschleißfestes Erzeugnis erzielt wird und die genannten Eigenschaften bei waagerechter Anordnung als trittfester Fußboden oder Außenflächenbelag wirksam und nutzbar sind.

Diese Aufgabe wird durch die in den Patentansprüchen beschriebene Erfindung gelöst.

Mit der hier beschriebenen Lösung erhält man im Gegensatz zum geschilderten Stand der Technik Produkte mit folgenden Eigenschaften:
- Glanz,
- versiegelte Poren,
- erhöhte Beständigkeit gegen Säuren und Laugen,
- erhöhte Beständigkeit gegen Industriereiniger und organische Lösungsmittel,
- schmutzabweisend und leicht zu reinigen,
- ausreichend verschleißbeständig.

Mit keinem der in Tabelle 1 aufgeführten Oberflächenbehandlungsmittel lassen sich bisher alle diese Anforderungen gleichzeitig erfüllen.

Nanokompositmaterialien bieten durch den hohen Vernetzungsgrad eine Verschleißbeständigkeit, die über der von Kunstharz- oder Siliconbeschichtungen liegt. Weiterhin werden Lacke mit hohem Feststoffgehalt eingesetzt, welche die Poren nicht nur hydrophobieren, sondern weitgehend versiegeln.

Der Randwinkel von Wasser auf einer ebenen Probenoberfläche dient als Maß für die Hydrophobie dieser Oberfläche. Je größer der Randwinkel ist, desto hydrophober ist die Oberfläche. Thermodynamisch-geometrische Überlegungen führen zu der Erkenntnis, dass sich beim Übergang von glatten zu rauen Oberflächen der Randwinkel ändert. Ist er auf der glatten Fläche kleiner/größer als 90 °, dann verringert/erhöht er sich beim Übergang zu rauen Oberflächen. Somit lassen sich extrem wasserabstoßende Oberflächen erzeugen, indem man hydrophobe Materialien mit einer rauen bzw. strukturierten Oberfläche versieht.

Die hier beschriebenen beschichteten Betonwerksteine besitzen eine Oberfläche mit definierter Mikrorauigkeit, die zu schmutzabweisenden Oberflächen (hydrophob und/oder oleophob) führt. Da der Schmutz an der Oberfläche nicht haftet, lässt sich der Reinigungsaufwand drastisch senken. Die Mikrorauigkeit wird erreicht durch entsprechende Vorbehandlung der Betonwerksteine (z. B. Schleifen mit definierter Körnung) und/oder durch Verwendung von Nanokompositlacken, die Füllstoffe (z. B. Siliciumdioxid) definierter Partikelgröße enthalten.

Die Mikrorauigkeit führt zu einer Rutschhemmung. Diese Rutschhemmung ist bei Fußböden erwünscht und beispielsweise bei polierten Granitplatten, einem ansonsten teuren und hochwertigen Naturstein, nicht gegeben.

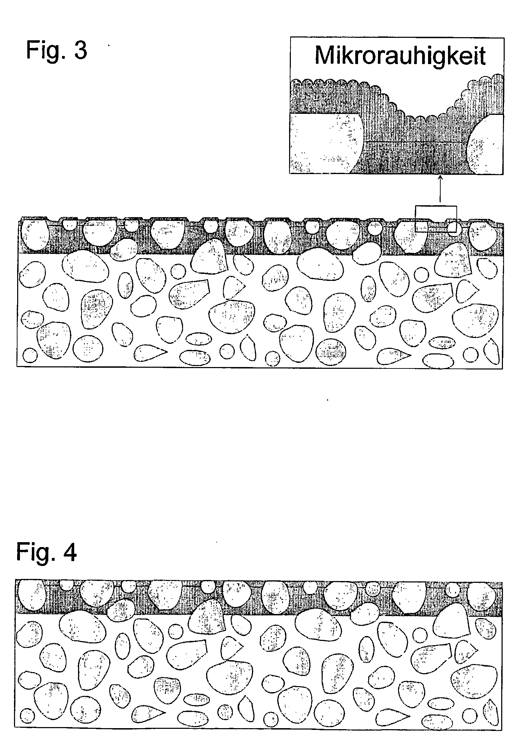

Die Verschleißbeständigkeit von beschichteten Platten besonders im Fußbodenbereich wird weiter verbessert, indem durch ein geeignetes Vorbehandlungsverfahren die Betonwerksteinoberfläche vor der Beschichtung so vorbereitet wird, dass die Kornoberflächen gegenüber der zementgebundenen Matrix hervorstehen. Eine Abnutzung durch Abrieb wird dann zuerst auf den Kornoberflächen stattfinden und die zementgebundenen Bereiche bleiben weiterhin versiegelt. (Fig. 4).

Mit der hier beschriebenen Lösung gelingt es, die vorteilhaften hydrophoben Eigenschaften von Nanokompositbeschichtungen so auf den Betonwerkstein zu übertragen, dass die Verschleißbeständigkeit nach wie vor durch die Hartstoffbestandteile gewährleistet bleibt. Die Zementmatrix wird dauerhaft vor chemischem Angriff geschützt. In Verbindung mit einer gezielt eingestellten Mikrorauhigkeit wird eine hohe schmutzabweisende Wirkung erreicht, wie sie im Stand der Technik nicht bekannt geworden ist.

Die Erfindung wird nachstehend an vier Ausführungsbeispielen zu den Herstellungsverfahren näher erläutert. Die beigefügten Abbildungen zeigen schematisch im Schnitt:

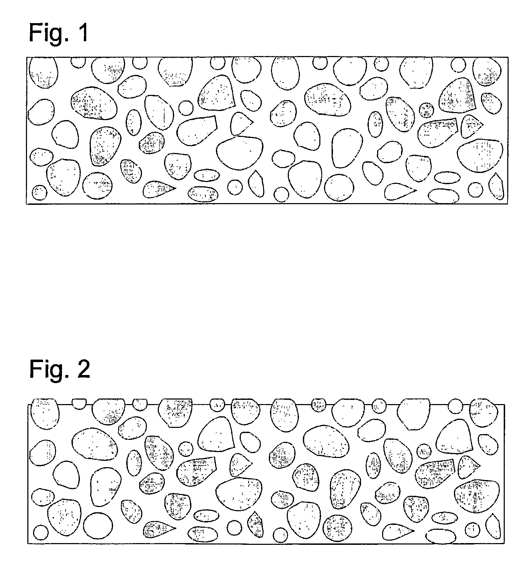

- Fig. 1:: eine unbehandelte Betonsteinplatte im geschnittenen oder geformten Zustand, deren Oberseite erfindungsgemäß behandelt werden soll.
- Fig. 2:: die gleiche Platte mit selektiv geschliffener Oberfläche, wobei die eingelagerten Körner höher hervorstehen als die zementgebundene Phase.
- Fig. 3:: die gleiche Platte im gebrauchsfertigen Zustand nach Auftragung der Nanokompositschicht, auf welcher, wie die Ausschnittvergrößerung zeigt, durch zugesetzte Mikropartikel eine Mikrorauigkeit erzeugt wurde.
- Fig. 4:: die gleiche Platte nach starker Abnutzung, wobei die höher stehenden Körner den Abrieb auf der zementgebundenen Phase verhindern und die Poren dort versiegelt bleiben.

### Beispiel 1

Betonwerksteinplatten bzw. Betonwerksteinbauteile enthalten in der Verschleißschicht als Zuschläge Hartgesteine wie z. B. Granitsplitt. Bei der Herstellung von den zu beschichtenden Betonwerksteinen wird dementsprechend als Zuschlag für die Verschleiß- bzw. Deckschicht Hartgestein (> 70 Ma-% des gesamten Zuschlags) eingesetzt. Nach ausreichender Aushärtung der Zementsteinmatrix wir die Oberfläche des Betonwerksteins geschliffen. Die Schleifbedingungen werden so gewählt, dass die Zementsteinmatrix mindestens 0,05 mm tiefer als der Hartgesteinszuschlag abgetragen wird. Die so vorbereitete Zementsteinmatrix wird durch Energieeintrag, z. B. IR-Strahlung, beschleunigt verfestigt und teilweise getrocknet, was zur Schaffung einer hochreaktiven Oberfläche führt. Die Dauer der Behandlung soll zwischen 1 und 20 Minuten, vorzugsweise zwischen 5 und 10 Minuten liegen. Anschließend wird der für die jeweiligen Eigenschaften erforderliche Nanokompositlack appliziert. Die Applikation kann durch Sprühen, Spritzen, Walzen, Rakeln (auch mit porösen Rakeln), Fluten, Tauchen, Bürsten erfolgen. Die Anbindung des Lacks an die Oberfläche geschieht durch eine chemische Reaktion (Polykondensation) des Zementsteins mit dem Nanokompositlack. Die Kondensationsreaktion verläuft unter Abspaltung von Wasser. Die Reaktion wird wiederum durch Energieeintrag beschleunigt, vorzugsweise durch infrarote Strahlung. Bei lichthärtenden Nanokompositmaterialien erfolgt zusätzlich eine fotochemische Vernetzung organischer Gruppen durch Bestrahlung mit Licht, vorzugsweise UV-Licht.

### Beispiel 2

Bereits verlegte Betonwerksteine werden mittels Hochdruckreiniger zunächst gereinigt und anschließend geschliffen. Wiederum werden die Schleifbedingungen so gewählt, dass die Zementsteinmatrix mindestens 0,05 mm tiefer als der Zuschlag abgetragen wird. Die Zementsteinmatrix wird durch Gebläse oder durch Energieeintrag (z. B. IR-Strahlung) getrocknet, bis die Oberfläche des Betonwerksteins dauerhaft frei von flüssigem Wasser bleibt. Anschließend wird der für die jeweiligen Eigenschaften erforderliche Nanokompositlack appliziert. Die Applikation kann durch Sprühen, Spritzen, Walzen, Rakeln (auch mit porösen Rakeln), Fluten, Tauchen, Bürsten erfolgen. Die Anbindung des Lacks an die Oberfläche geschieht durch eine chemische Reaktion (Polykondensation) des Zementsteins mit dem Nanokompositlack. Die Kondensationsreaktion verläuft unter Abspaltung von Wasser. Die Reaktion wird wiederum durch Energieeintrag beschleunigt, vorzugsweise durch infrarote Strahlung. Bei lichthärtenden Nanokompositmaterialien erfolgt zusätzlich eine fotochemische Vernetzung organischer Gruppen durch Bestrahlung mit Licht, vorzugsweise UV-Licht.

### Beispiel 3

Als thermisch härtendes Nanokompositmaterial in den Beispielen 1 und 2 wird das Produkt inoCOAT HC der inocermic GmbH, Hermsdorf verwendet.

### Beispiel 4

Ein UV-härtendes Nanokompositmaterial kann auf folgende Weise erhalten werden: 89 g Vinyltriethoxysilan und 111 g Mercaptopropyltrimethoxysilan werden in einer Mischung aus 500 g Butylacetat und 250 g Ethanol gelöst und langsam unter Rühren mit 70 g 0,1 M Salzsäure versetzt. Nach 2 h Rühren werden in dieser Mischung 10 g Fällungskieselsäure FK 300 DS (Degussa) dispergiert. Es ist darauf zu achten, dass die Temperatur nicht über 30 °C ansteigt. Kurz vor der Verarbeitung löst man 2 g Fotoinitiator (z. B. Irgacure 184 von Ciba) in der Mischung. Nach dem Auftrag und dem Abdunsten des Lösungsmittels erfolgt die Härtung mit UV-Licht, z. B. mit Hilfe einer Quecksilbermitteldrucklampe, 1200 W innerhalb von 15 s.

## Patentansprüche

1. Oberflächenbehandelter Betonwerkstein mit den Eigenschaften:
- säurebeständig und laugenbeständig,
- beständig gegenüber handelsüblichen Reinigungs- und Pflegemitteln,
- hemmend gegenüber Auslaugerscheinungen, Ausblühungen und damit verbundenen oberflächlichen Verfärbungen,
- wasserabweisend und schmutzabweisend,
und mit einer Kombination der folgenden Merkmale:
- der Betonwerkstein enthält als Zuschläge Hartgestein,
- das an der Oberfläche des Betonwerksteins liegende Hartgestein steht gegenüber der Zementmatrix 0,005 mm bis 2 mm hervor und
- mindestens die Zementmatrix weist eine hydrophobe, organisch-anorganische Nanokompositschicht mit Mikrorauigkeit auf.

2. Verfahren zur Herstellung eines Betonwerksteins nach Anspruch 1, der als trittfester Bodenbelag im Innen- und Außenbereich verwendet wird, **dadurch gekennzeichnet, dass**
- in die Betonwerksteinoberfläche zunächst durch Oberflächenbehandlung Vertiefungen eingearbeitet werden, so dass das Hartgestein gegenüber der Zementmatrix im Bereich zwischen 0,005 mm und 2 mm hervorsteht, und
- daran anschließend eine organisch-anorganische Nanokompositschicht aufgetragen wird, wobei mindestens die Vertiefungen mit dieser Nanokompositschicht versehen werden, wobei nach Einarbeitung der Vertiefungen und Beschichtung die beschichteten Bereiche eine Mikrorauigkeit aufweisen.

3. Verfahren nach Anspruch 2, **dadurch gekennzeichnet,**
**dass** die Vertiefungen durch Schleifen, Strahlen, Flammen, steinmetzmäßige Bearbeitung, Waschen oder Säuern hergestellt werden.

4. Verfahren nach Anspruch 2 und 3, **dadurch gekennzeichnet,**
**dass** die Nanokompositschicht durch Auftrag einer flüssigen Vorstufe und einer daran anschließenden Trocknung und Aushärtung erfolgt.

5. Verfahren nach Anspruch 4, **dadurch gekennzeichnet,**
**dass** der Auftrag der flüssigen Vorstufe mittels Spritzen, Sprühen oder Vernebeln erfolgt.

6. Verfahren nach Anspruch 4, **dadurch gekennzeichnet,**
**dass** der Auftrag der flüssigen Vorstufe durch Pinsel- bzw. Bürstenauftrag, Verreiben, Walzen oder Rakeln erfolgt.

7. Verfahren nach Anspruch 4, **dadurch gekennzeichnet,**
**dass** der Auftrag der flüssigen Vorstufe durch Tauchen, Fluten oder Lackvorhanggießen erfolgt.

8. Verfahren nach Anspruch 4 bis 7, **dadurch gekennzeichnet,**
**dass** die Aushärtung durch kurzzeitiges Bestrahlen mit UV-Licht erfolgt.

9. Verfahren nach Anspruch 4 bis 7, **dadurch gekennzeichnet,**
**dass** die Aushärtung mit Unterstützung von Mikrowellenstrahlung erfolgt.

## Claims

1. Surface-treated cast stone having the following properties:
- acid and alkali resistance,
- resistance to commercially available detergents and cleaning agents,
- inhibition of leaching appearances, efflorescences and the corresponding superficial discolorations,
- hydrophobic and anti-soiling properties,
and a combination of the following features:
- the cast stone contains aggregates in the form of hard stones,
- the hard stones at the surface of the cast stone protrude 0.005 mm to 2 mm from the cement matrix, and
- at least the cement matrix comprises a hydrophobic, organic-inorganic nanocomposite coating with microroughness.

2. Method for producing a cast stone according to claim 1, which is used as a wear-resistant flooring material both inside and outside, **characterised in that**
- first of all, recesses are formed in the cast stone surface by surface treatment such that the hard stones protrude between 0.005 mm and 2 mm from the cement matrix, and
- next, an organic-inorganic nanocomposite coating is applied, covering at least said recesses, so that after forming the recesses and applying the coating, the coated areas have microroughness.

3. Method according to claim 2, **characterised in that** said recesses are formed by grinding, blasting, flaming, stone masonry, washing or acidification.

4. Method according to claims 2 and 3, **characterised in that** the nanocomposite coating is effected by application of a liquid precursor and subsequent drying and curing.

5. Method according to claim 4, **characterised in that** the liquid precursor is applied by spraying, atomising or nebulising.

6. Method according to claim 4, **characterised in that** the liquid precursor is applied by brush application, rubbing, roller coating or knife application.

7. Method according to claim 4, **characterised in that** the liquid precursor is applied by immersion, flow coating or curtain coating.

8. Method according to claims 4 to 7, **characterised in that** curing is effected by short-term UV light exposure.

9. Method according to claims 4 to 7, **characterised in that** curing is effected using microwave radiation.

## Revendications

1. Pierre artificielle en béton à surface traitée et présentant les propriétés suivantes:
- résistance aux acides et aux lessives,
- résistance aux détergents et aux produits d'entretien usuels,
- prévention des phénomènes de lessivage, des efflorescences et des décolorations superficielles correspondantes,
- hydrophobicité et propriétés anti-salissantes,
et une combinaison des caractéristiques suivantes:
- ladite pierre artificielle comprend des agrégats sous la forme de pierres dures,
- les pierres dures à la surface de ladite pierre artificielle présentent une saillie de 0,005 mm à 2 mm par rapport à la matrice de ciment, et
- au moins ladite matrice de ciment comprend un revêtement nanocomposé hydrophobique, organo-inorganique à rugosité microscopique.

2. Procédé de fabrication d'une pierre artificielle selon la revendication 1, pour des utilisations intérieures et extérieures en tant que revêtement de sol résistant à l'usure, ledit procédé étant **caractérisé en ce que**
- tout d'abord, on produit des creux dans la surface de ladite pierre artificielle par traitement superficielle de sorte que les pierres dures présentent une saillie de 0,005 mm à 2 mm par rapport à la matrice de ciment, et
- ensuite on applique un revêtement nanocomposé organo-inorganique, ledit revêtement nanocomposé couvrant au moins lesdits creux, et après formation des creux et application dudit revêtement, les parties revêtues présentent une rugosité microscopique.

3. Procédé selon la revendication 2, **caractérisé en ce que** lesdits creux sont formés par meulage, grenaillage, flamme, taille de pierre, lavage ou acidification.

4. Procédé selon les revendications 2 et 3, **caractérisé en ce que** l'application dudit revêtement nanocomposé s'effectue par application d'un précurseur liquide suivie des étapes de séchage et de durcissement.

5. Procédé selon la revendication 4, **caractérisé en ce que** ledit précurseur liquide est appliqué par projection, atomisation ou évaporation.

6. Procédé selon la revendication 4, **caractérisé en ce que** ledit précurseur liquide est appliqué par pinceau ou brosse, frottement, roulage ou raclage.

7. Procédé selon la revendication 4, **caractérisé en ce que** ledit précurseur liquide est appliqué par immersion, aspersion ou application à rideau.

8. Procédé selon les revendications 4 à 7, **caractérisé en ce que** ledit durcissement s'effectue par exposition brève à la lumière UV.

9. Procédé selon les revendications 4 à 7, **caractérisé en ce que** ledit durcissement s'effectue à l'aide de micro-ondes.
